# EUROPEAN PATENT APPLICATION

(11) **EP 4 134 567 A1**
(43) Date of publication of application: **15.02.2023**
(21) Application number: 21190706.8
(22) Date of filing: 10.08.2021
(51) Int. Cl.: F16F 15/131, F16F 15/139, F16F 15/14

(54) **A FLANGE FOR TORSION DAMPING DEVICES**

(71) Applicant: Valeo Otomotiv Sanayi ve Ticaret A.S., 34854 Istanbul (TR)
(72) Inventor: MARIA SOOSAI, Bright Anto, 600130 Chennai (IN); GNANASAMBANDAM, Murugesh, 600130 CHENNAI (IN); SUNDARAN, Nisanth Kollante, 600130 CHENNAI (IN); LAPORTE, Benjamin, 80009 Amiens (FR)
(74) Representative: Vincent, Catherine Marie Marguerite

(57) **Abstract**

A torsion damping device (1) for a torque transmission of a vehicles engine, comprising at least :one input torque element (2) and one output torque element (3), having an rotation axis (R), one group of at least two damping means (D) mounted between the input and output torque elements, acting against the rotation of the input and output torque elements relative to each other, at least two gap (G) provided between ends of the damping means (D), a damping module comprising a flange (10) having at least two radially extended driving tabs (11), which is positioned on the gaps (G), to support the group of damping means (D) wherein the flange (10) is segmented and connected directly or indirectly to each other by connection means (C), each flange segment (10a) having one of the driving tabs (11).

## Description

### TEHCNICAL FIELD

The present invention relates to a torsion damping device for an internal combustion engine, in particular a motor vehicle and production method of said torsion damping devices.

### PRIOR ART

Torsion damping devices in internal combustion engines stores energy generated by firing pulse of pistons and transmitting it to the shaft so that it continues smoothly rotating through the next piston stroke. One of the most known torsion damping devices is dual mass flywheels.

The dual mass flywheels having a first and a second annular mass are connected to each other resiliently. For this connection, a spring in two piece is positioned to one of the masses and torque is transmitted by said spring one to another. Flange is used for this transmission. A flange comprises a circular body and tabs extended radially from said body and connected to first annular mass. And said tabs are positioned between the springs so when the first annular mass starts rotating, the rotation movements is transmitted to the spring and the second annular mass by contact between the tabs and the springs.

The flange is used in variable configurations in torsion damping devices. In some variants, the flange is directly connected to one of the annular masses. In other variants, the flange is used on torque limiters or inner dampers which both of also connected to the torsion damping devices.

The weight of components is one of the most important problems in automotive industry for transport; manufacturing and assembly by the operator, and in particular, the monobloc flange is one of the heavy elements of the torsion damping devices.

In a known manner, small components are difficult to assemble during the assembly process, and in particular can move during the pallet displacement. Besides that, the known flanges also requires at least six connection elements to connect the first annular mass.

During the transmission, the torque is transmitted over the connection elements. That is one of the main reasons, the requirement of the more connection elements. Also, more connection elements are caused more complex assembly process and more weight.

As a result all of the problems mentioned above, have made it necessary to provide an improvements in the related field.

### OBJECTION OF THE INVENTION

The present invention, aims to eliminate the problems mentioned above and to provide a technical improvements to the related field.

The main aim of the invention is to provide a lighter flange than the flanges known in the state of art and consequently, provide a lighter doubles mass flywheel.

Another aim of the invention is to provide a flange requires less costs and/or less connection means which connects the flange to annular masses of the flywheel.

### BRIEF DESCRIPTION OF THE INVENTION

The present invention above proposes, according to a first aspect and which can be construed from the detailed description, a torsion damping device for a torque transmission of a vehicles engine. Accordingly, the present invention comprises, one input torque element and one output torque element, having an rotation axis, one group of at least two damping means mounted between the input and output torque elements, acting against the rotation of the input and output torque elements relative to each other, at least two gap provided between ends of the damping means, a damping module comprising a flange having at least two radially extended driving tabs, which is positioned on the gaps to support the group of damping means, and wherein the flange is segmented and connected directly or indirectly to each other by connection means, each flange segment having one of the driving tabs.

According to the invention, making a segmented flange eliminates all non-essential parts for its assembly and motor operation, compared to the known one-piece flange, both for a cost material reduction and without affecting its performance. No need to have one completely continuous piece of torque for 360 degrees around the axis of rotation.

By this way, a mass reduction is provided on the torsion damping device― with less CO2 emission during vehicle usage - and a reduced material quantity usage ― with less CO2 emission during manufacturing and cost reduction due to optimization of the flange manufacturing. Less material is needed: at least two segments is necessary to form this new-segmented flange and make it as light as possible. The weight reduction of the segmeted flange can be in the range of 30-40% compare to the known one-piece flange.

According to the invention, the segmented flange forms a drive plate with can have a well reduction of the torsional stiffness, because segmented flanges can be more flexible than the known one-piece flange. As a result, there is advantageously less over-torque in the torque transmission. The constraints of shape, increased weight, angular bore, sizing and misalignment are eliminated.

Besides, each flange segment includes a driving tab. By this way, the number of flange segments can be optimized and limited. Each flange segment can be dedicated to essentials functions, like the torque transmission and/or the support of other component of the torsion damping device. A fewer number of connection elements can be necessary to connect it to the first annular mass, for example less than six connection elements.

The first aspect of the invention can have any of the features described below, combined together or taken independently:
A preferred embodiment of the invention comprises a connection part connected or integrated to each of the driving tabs, in order to easily connect all flange segments and standardize their manufacture.
A preferred embodiment of the invention comprises a connection part connected or integrated to each of the driving tabs for cooperate with or be fixedly connected to one of the input or output torque elements.

In a preferred embodiment of the invention, at least one radially extending a tooth housing formed on the connection part for an axially radially tooth of flywheel hub. By this way, the flange segments positions are easy to manage during the assembly process, because they are directly mounted on the hub by form-fitting cooperation, e.g. by tooth shapes.

In a preferred embodiment of the invention, a driving edge of the driving tabs are configured to tangentially contacts the damping means.

In a preferred embodiment of the invention, at least one connection mean formed on the connection part for connecting the flange segment to one of the torque elements.

In a preferred embodiment of the invention, at least one of the connection means is an aperture for connection rivet.

In a preferred embodiment of the invention, at least one of the connection means is a connecting plate fixedly assembled with the flange segments. By this way during the assembly process, the operator no longer needs to manage at least two flanges but only one sub-assembly (called a unitary sub-assembly or a pre-assembling system).

A preferred embodiment of the invention comprises at least one sealing washer supported on the input and output torque elements, the at least one sealing washer forming at least one of the connection means for connecting the flange segments to each other. In others terms, the connecting plate is formed by a sealing washer. By this way, a unitary sub-assembly is provided, and the sealing washer combines several functions, including: the connection of flange segments and the sealing of the torsion damping device, precisely for the chamber of springs.

In a preferred embodiment of the invention, at least one sealing washers indirectly connects the flange segments to each other. In others terms, the one sealing washers and the flange segments is connected (or preassembly) with (an) other(s) component(s), for example with two retainers plates. The unitary sub-assembly is formed by the flange segments, the least one sealing washers and additional(s) component(s) of the damping module.

In a preferred embodiment of the invention, at least one of the connection mean is protrusion or integrated flange rivets. By this way, the unitary sub-assembly (and in particular the flange segments) can be easily prepared: the rivets are no longer inserted separately into the apertures. Risk of displacement of each flange segment is limited. Consequently, the insertion error of the connection means in the different components is reduced. This assembly process can also be easily automated. In a preferred embodiment of the invention, the connection means is formed on a first surface of the segmented flange faced one the torque elements and/or a second surface of the segmented flange faced other torque element.

In a preferred embodiment of the invention, at least one of the connection means is formed on a connection part of the flange segments for connecting the flange segment to one of the input or output torque elements.

In a preferred embodiment of the invention, at least one of the connection means is at least two connection rivets for connecting the flange segments to one of the input and output torque elements.

In a preferred embodiment of the invention, at least one of the connection means is protrusion or integrated flange rivets on flange segments.

In a preferred embodiment of the invention, protrusion and/or integrated flange rivets are made by machining or forging or casting step.

In a preferred embodiment of the invention, the connection means is formed on a first surface of the segmented flange faced one of the input and output torque elements and/or a second surface of the segmented flange faced other torque input element.

A preferred embodiment of the invention comprises a pendulum damping device arranged axially between the input and output torque elements having at least one pendulum plate movably mounted on flange segments which forms a pendulum support.

A preferred embodiment of the invention comprises pendulum housing formed on the connection part and pendulum plates positioned on both side of the connection part and a pendulum plate connecter connects the pendulum plates to each other by going through pendulum housing.

A preferred embodiment of the invention comprises a torque limiter that having at least two friction plate axially distant from each other, the connection part are positioned between the friction plates. The two friction plates are axially distant to form a housing for the segmented flange, in particular the connection part.

A preferred embodiment of the invention comprises a preload means which applying load on one of the friction plate.

In a preferred embodiment of the invention, connection part is formed as a spring mean, preferably as a sealing washer, to preload on at least one of the friction plates.

In a preferred embodiment of the invention, a spring housing formed on the connection part for secondary damping mean of the flywheel.

In a preferred embodiment of the invention, connection part is in form of arc.

In a preferred embodiment of the invention, total angle value of the flange segments is less than 360 degree, preferably between 15° and 220°, advantageously to be angularly separated from each other.

In a preferred embodiment of the invention, total angle value of the flange segments is less than 360 degree, preferably between 30° and 359°, advantageously to be angularly cooperate with each other.

In a preferred embodiment of the invention, connection parts are connected to each other by riveting or welding, so as to ensure a fixed assembly.

In a preferred embodiment of the invention, end of connection part are bent in such a way that connected end are positioned on top of each other.

In a preferred embodiment of the invention, end of connection part are overlapped to each other, in order to ensure the correct position and assembly of the flange segments between them.

In a preferred embodiment of the invention, total angle value of the flange segments is between 360° and 440.

The present invention proposes, according to a second aspect and which can be construed from the detailed description below, a method of assembling a damping module for a torsion damping device. Accordingly, the method comprising at least the following steps:
a) Providing at least:
   - a flange, with a rotation axis, formed by a plurality of flange segments having a connection part, which is pre-connected to the flange or made in the flange, and
   - at least one sealing washer, and
   - connection means;
b) Arranging the flange segments, angularly spaced each other or overlapping each other;
c) Connecting at least one sealing washer to the connection part of the flange segments by connecting means, in order to pre-assembly the sealing washer and the flange segments.

This method of assembling can include any of the features of the first aspect.

According to this method of assembling, a unitary sub-assembly is provided, by the at least one sealing washer pre-assembled to the flange segments with the same connection means. Assembly, transportation and handling steps are simplified. The unitary subassembly is both inexpensive and combines several functions, including the torque transmission and limitation, and the sealing.

In the same way, a mass reduction is provided on the damping module, and a reduced material quantity usage. The constraints of shape, increased weight, angular bore, sizing and misalignment are eliminated. The segmented flange forms a drive plate with can have a well reduction of the torsional stiffness, because segmented flanges can be more flexible than the known one-piece flange. As a result, there is advantageously less over-torque in the torque transmission.

In a preferred embodiment of the invention, the connection means is formed by two friction plate and the pre-connection of the flange segments to the connection means and comprise at least the following steps:
a) Providing
   - two friction plate in order to form the connection mean,
   - another connection mean, like for example a series of rivets;;
b') Inserting the flange segments between the two friction plate;
c') Clamping the flange segments between the two friction plates, and then securely connecting the friction plates and the sealing washer together by other connecting mean, so that the flange segments are tightly mounted between the two friction plate.

According to this method of assembling, the segment flange are both sandwiched and slidable between the two friction plates, in order to form the unitary sub-assembly, independently of the fixation of said friction plates.

More reduction of the torsional stiffness is possible. The friction plates become the contributors to the axial load of the torque limiter. No need for flange segments to receive rivet. No risk of it escaping from the two friction plates. Risk of component failure is also limited under over-torque conditions. Their service life is increased.

### BRIEF DESCRIPTION OF THE FIGURES

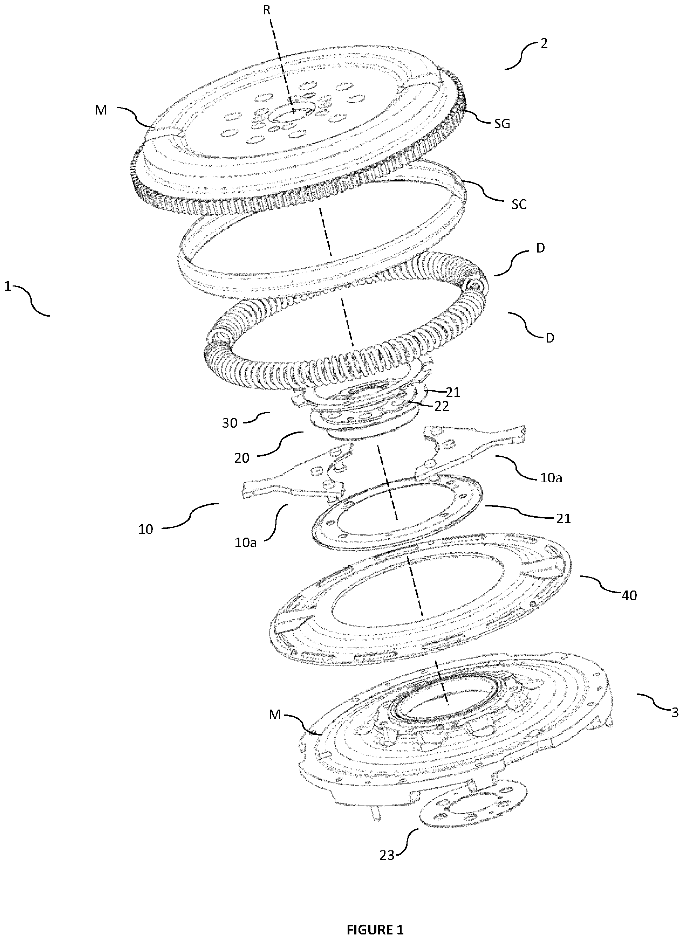

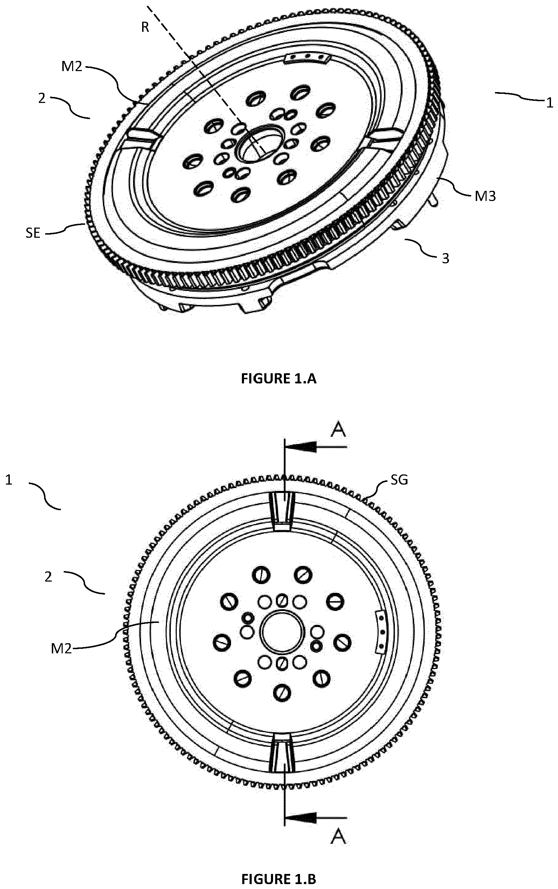

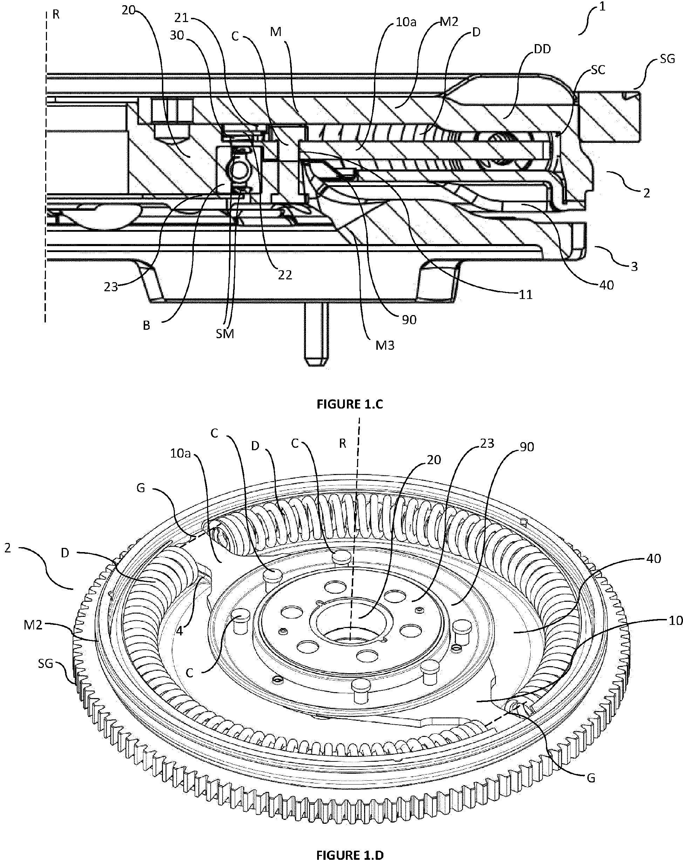

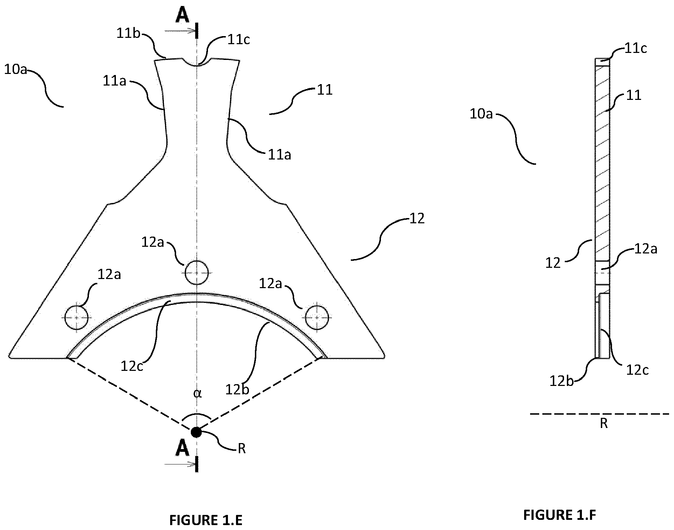

Figure 1 illustrates an exploded isometric view of an embodiment of the torsion damping device.
Figure 1.A an isometric view of the first embodiment of the torsion damping device.
Figure 1.B illustrates a top view of the Fig. 1.A.
Figure 1.C illustrates a cross section view of the Fig. 1.B.
Figure 1.D illustrates an isometric view of Fig. 1.A, without the output torque element.
Figure 1.E illustrates a top view of flange of Fig. 1.D.
Figure 1.F illustrates a cross section view of Fig. 1.E along A-A line.
Figure 2 illustrates an isometric view of the second embodiment of the torsion damping device.

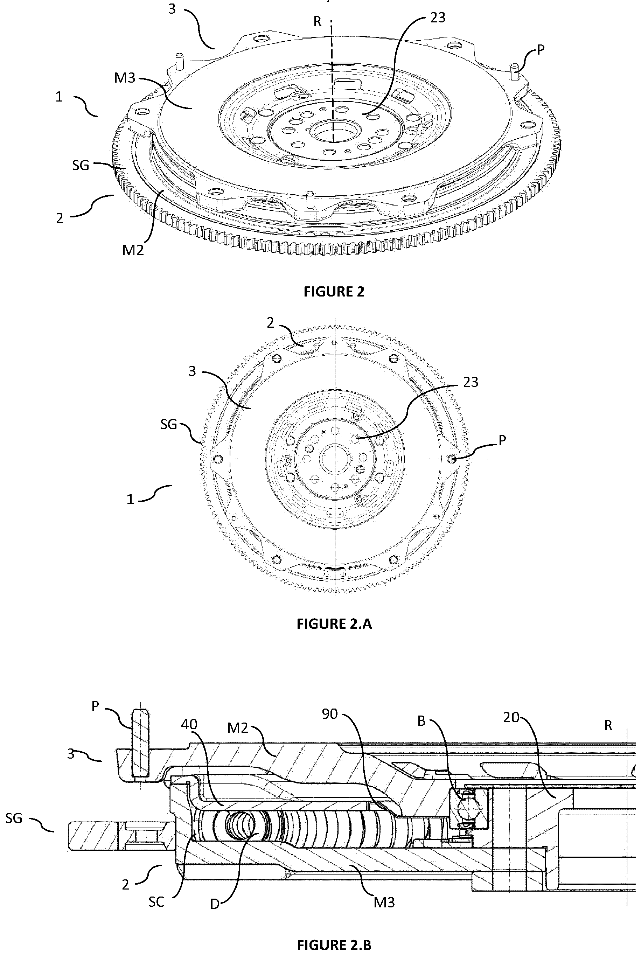

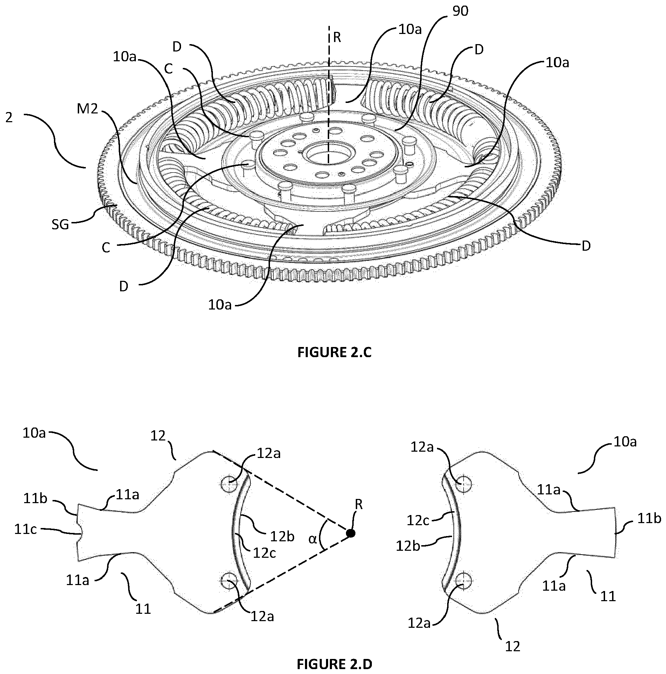

Figure 2.A illustrates a top view of flange of Fig. 2.
Figure 2.B illustrates a cross section view of Fig. 2.A.
Figure 2.C illustrates an isometric view of Fig. 2, without the output torque element.
Figure 2.D illustrates top view of flange of Fig. 2.B.

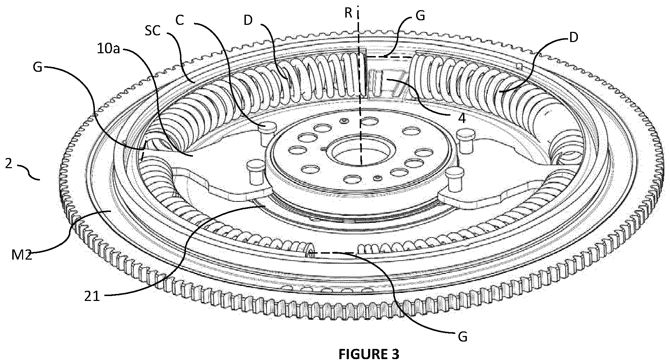

Figure 3 illustrates an isometric view of the third embodiment of the torsion damping device, without the output torque element.

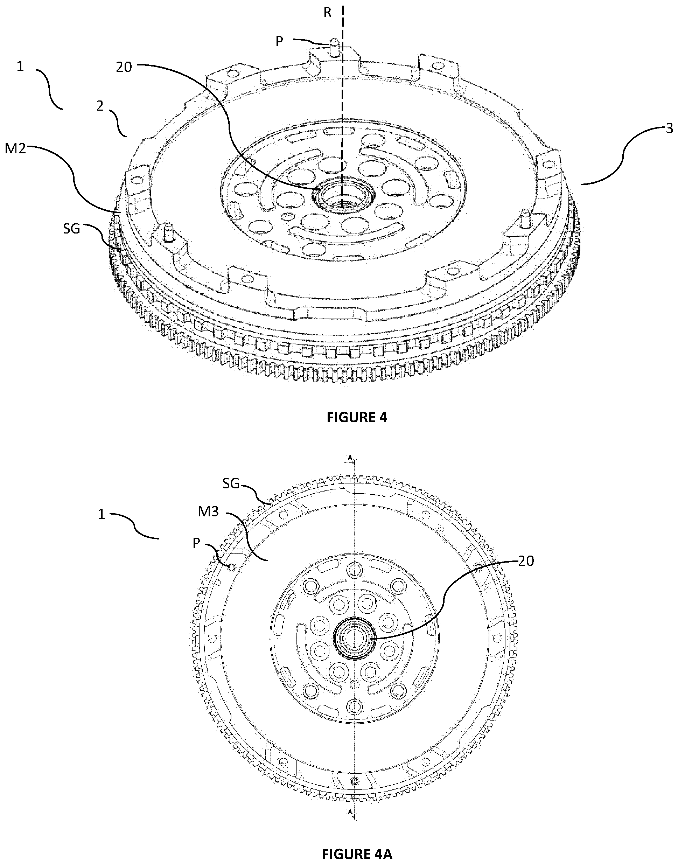

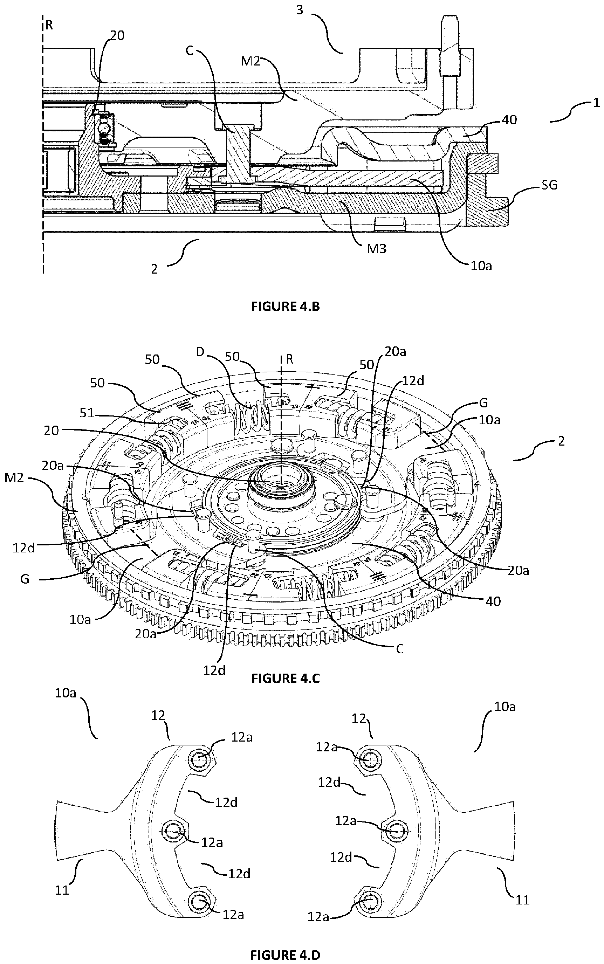

Figure 4 illustrates an isometric view of the fourth embodiment of the torsion damping device.
Figure 4.A illustrates top view of flange of Fig 4.
Figure 4.B illustrates a cross section view of the Fig. 4.
Figure 4.C illustrates an isometric view of Fig. 4, without the output torque element.
Figure 4.D illustrates a top view of flange of Fig. 4.C.

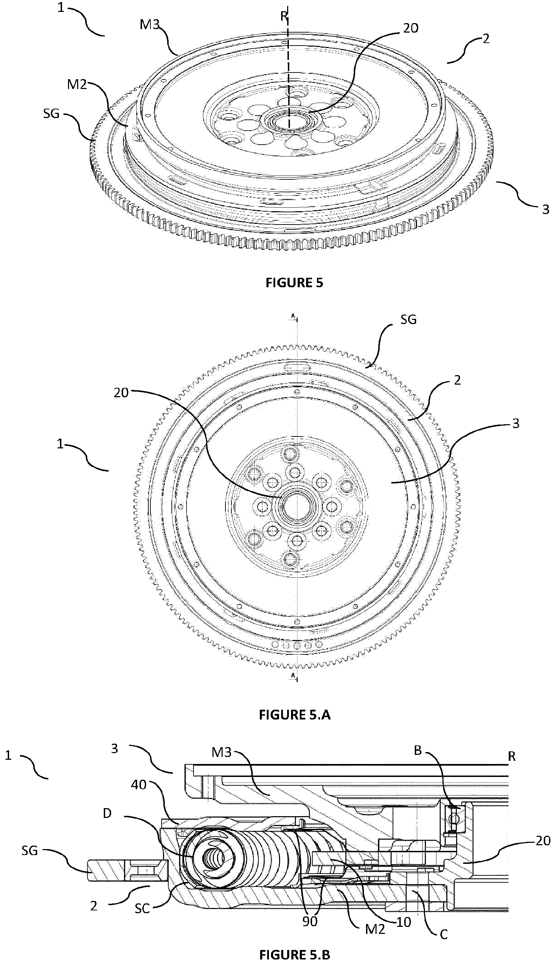

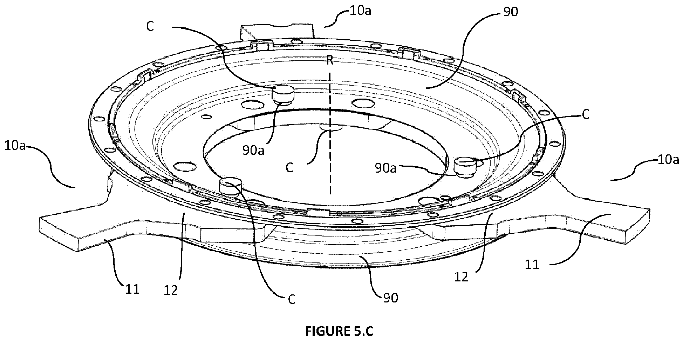

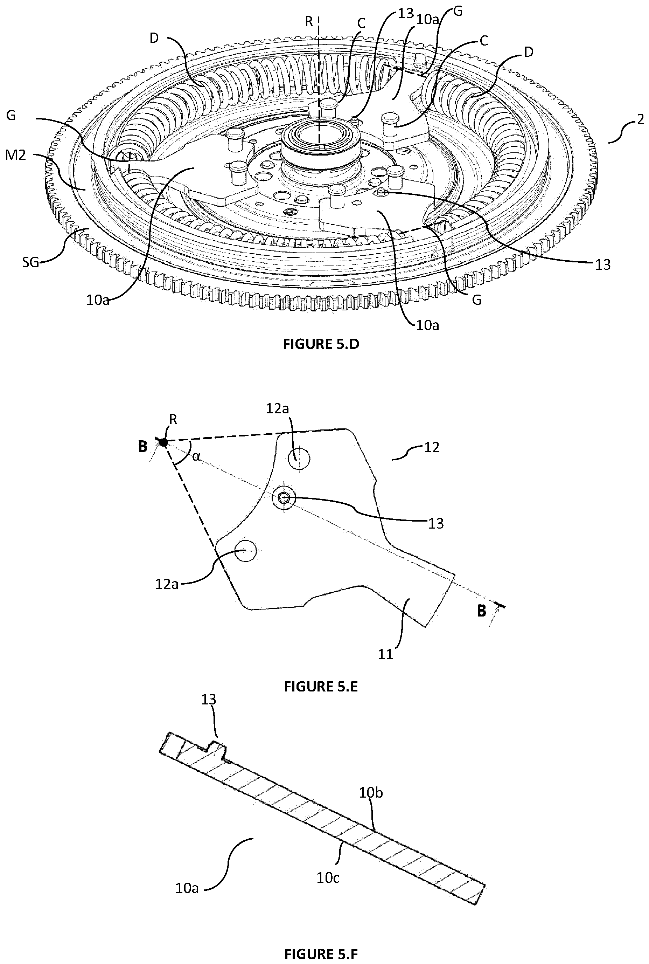

Figure 5 illustrates an isometric view of the fifth embodiment of the torsion damping device.
Figure 5.A illustrates top view of flange of Fig 5.
Figure 5.B illustrates a cross section view of the Fig. 5.
Figure 5.C illustrates an isometric view of pre-assembled the sealing washer and the flange.
Figure 5.D illustrates an isometric view of a Fig. 5.B, without the output torque element.
Figure 5.E illustrates a top view of flange of Fig. 5.D.
Figure 5.F illustrates a cross section view of Fig. 5.E along B-B line.

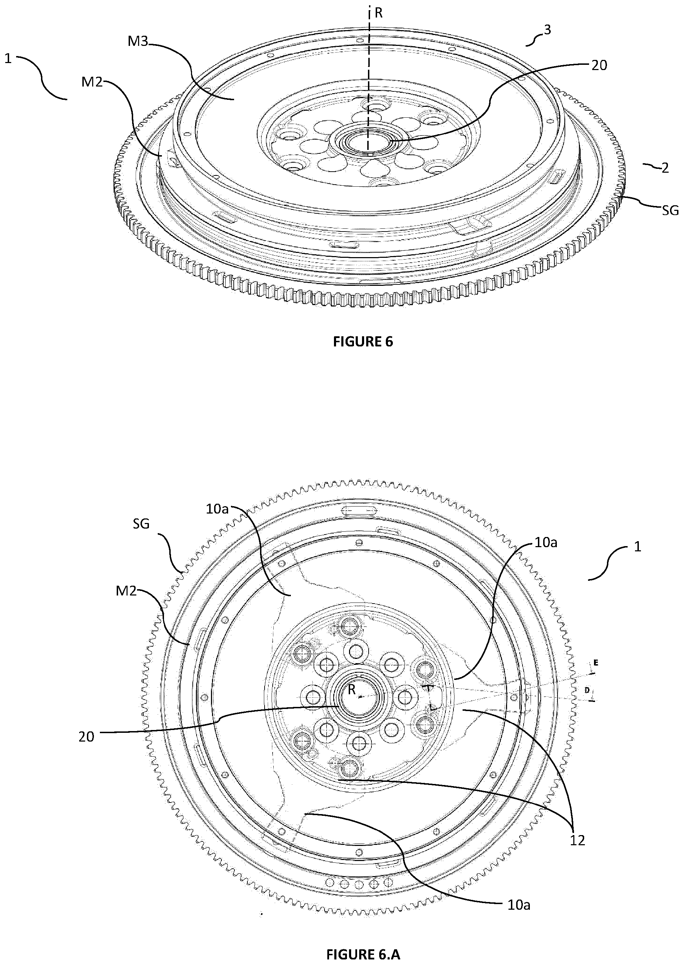

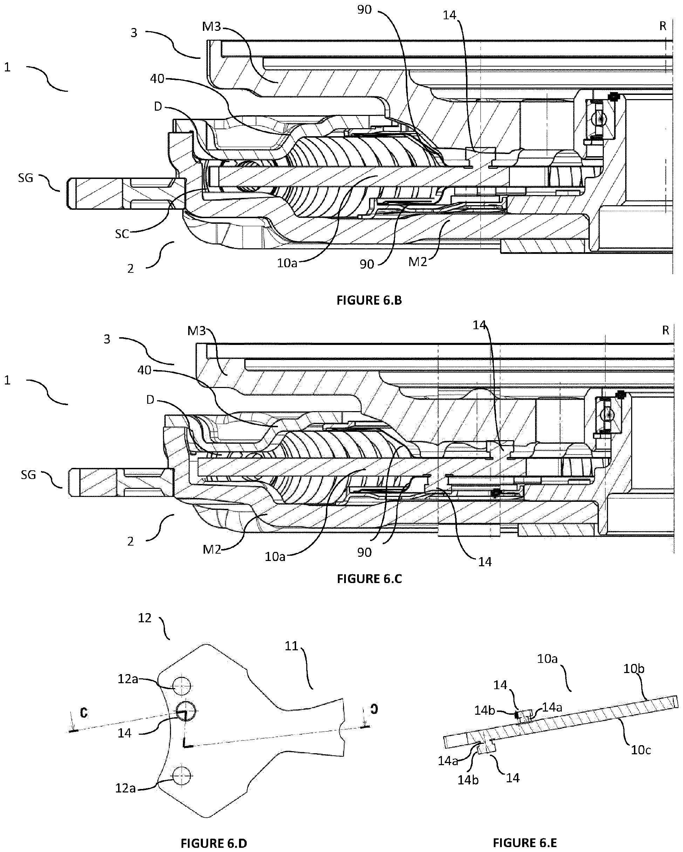

Figure 6 illustrates an isometric view of the sixth embodiment of the torsion damping device.
Figure 6.A illustrates a top view of the Fig. 6.
Figure 6.B illustrates a cross section view of the Fig. 6.A along D-D line.
Figure 6.C illustrates a cross section view of the Fig. 6.A along E-E line.
Figure 6.D illustrates a top view of flange of Fig. 6.A.
Figure 6.E illustrates a cross section view of Fig. 6.B along C-C line.

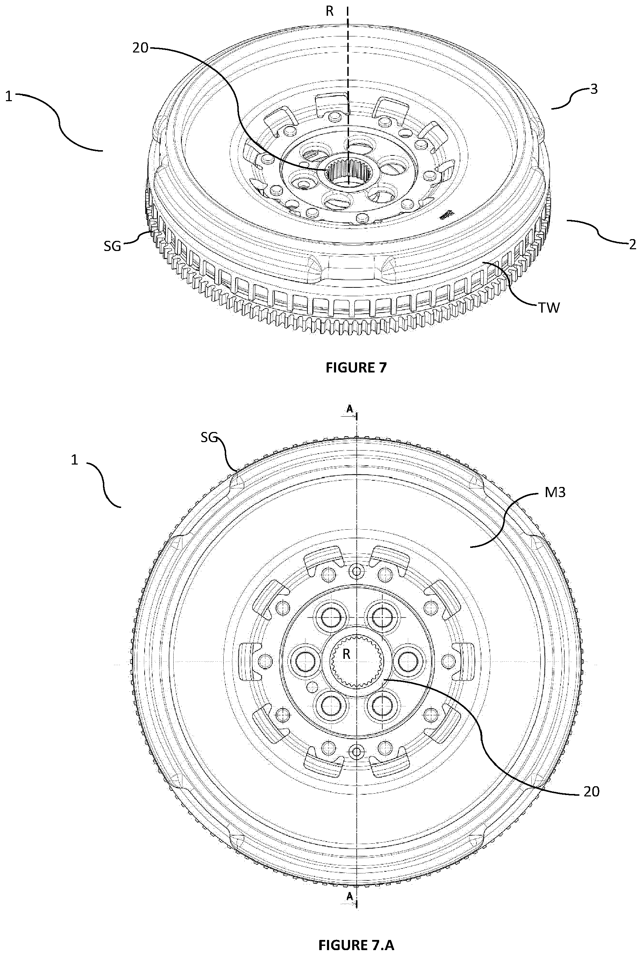

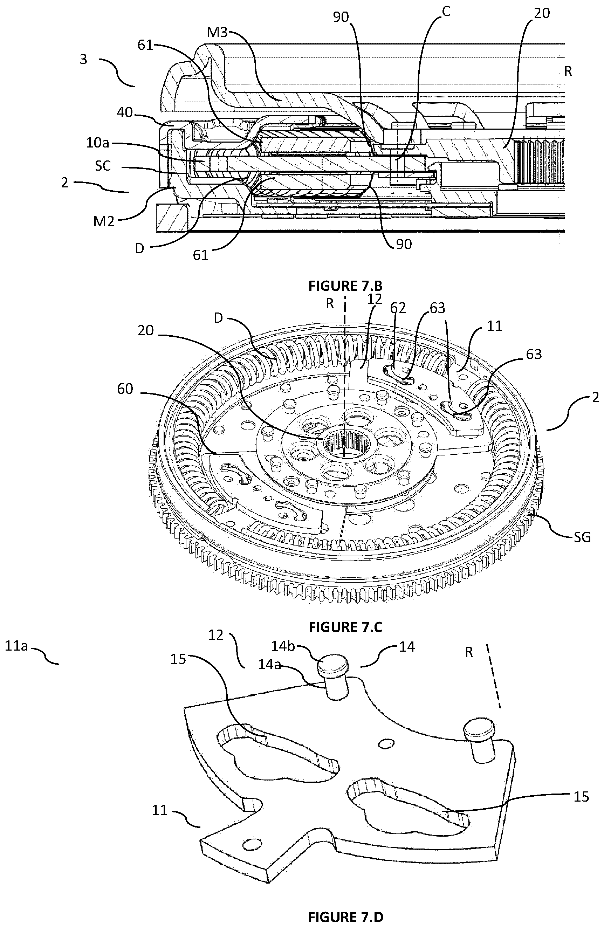

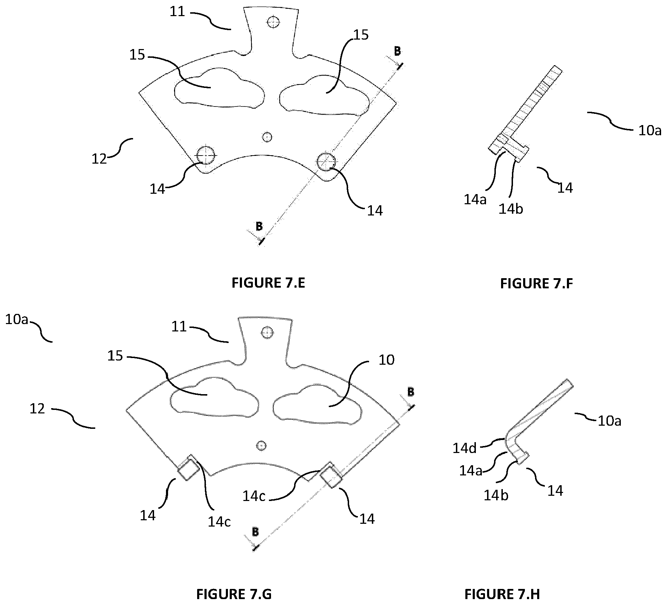

Figure 7 illustrates an isometric view of the seventh embodiment of the torsion damping device.
Figure 7.A illustrates a top section view of the Fig. 7.
Figure 7.B illustrates a cross section view of the Fig. 7.A, along A-A line.
Figure 7.C illustrates an isometric view of an embodiment of the torsion damping device of Fig. 7, without the output torque element.
Figure 7.D illustrates an isometric view of flange of Fig. 7.C.
Figure 7.E illustrates a top view of flange of Fig. 7.D.
Figure 7.F illustrates a cross section view of Fig. 7.E along B-B line.
Figure 7.G illustrates a top view of alternative flange of Fig. 7.C.
Figure 7.H illustrates a cross section view of Fig. 7.G along B-B line.

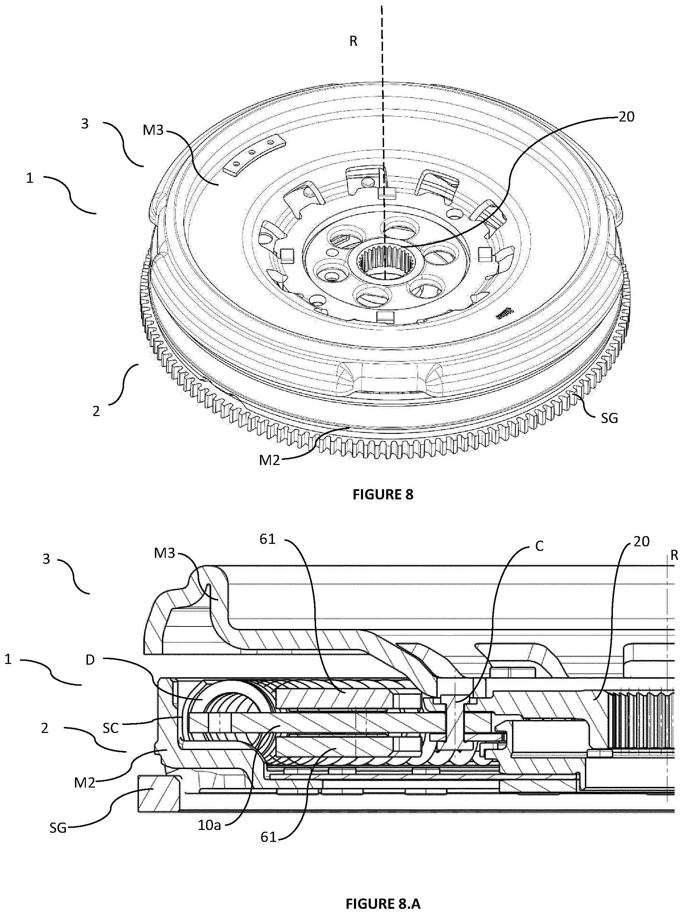

Figure 8 illustrates an isometric view of the eight embodiment of the torsion damping device.
Figure 8.A illustrates a cross section view of the Fig. 8.

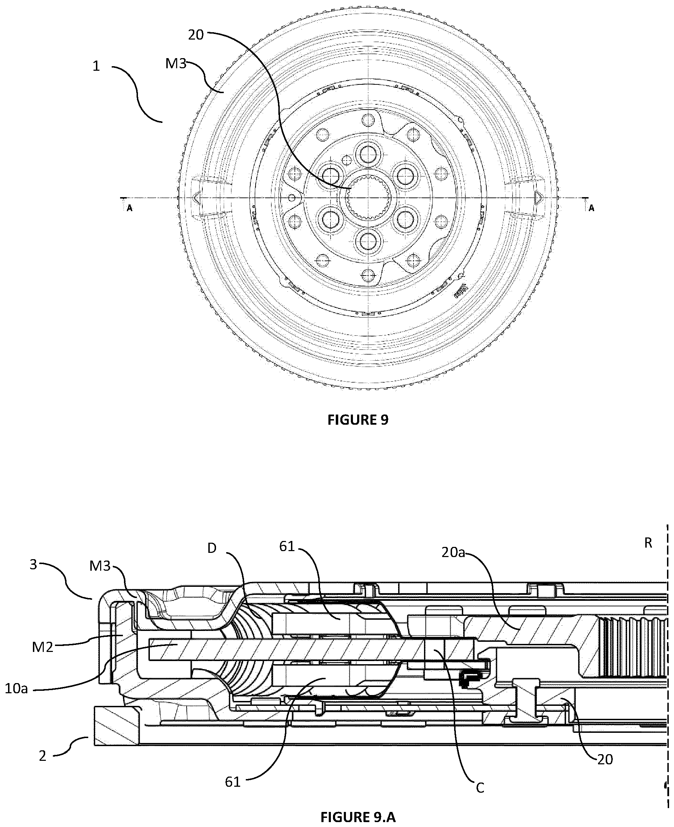

Figure 9 illustrates an isometric view of the ninth embodiment of the torsion damping device.
Figure 9.A illustrates a cross section view of the Fig. 9.

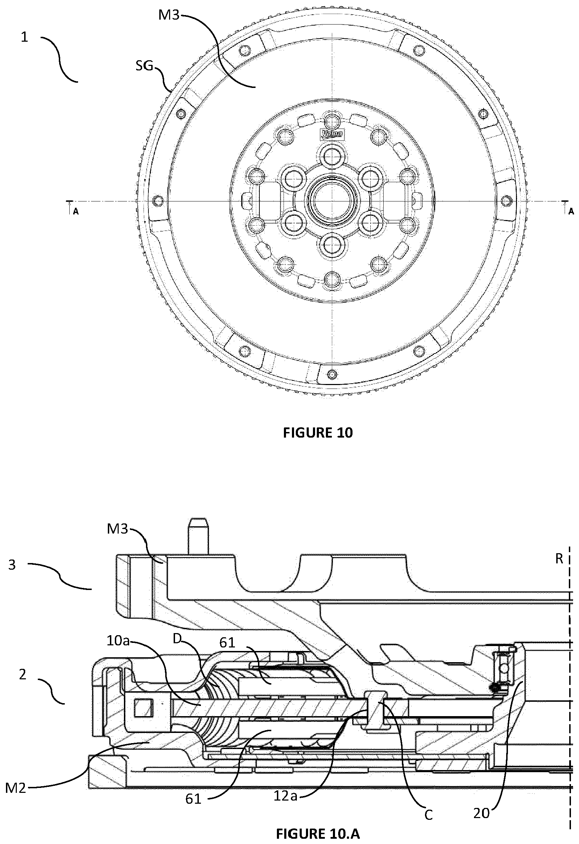

Figure 10 illustrates an isometric view of the tenth embodiment of the torsion damping device.
Figure 10.A illustrates a cross section view of the Fig. 10.

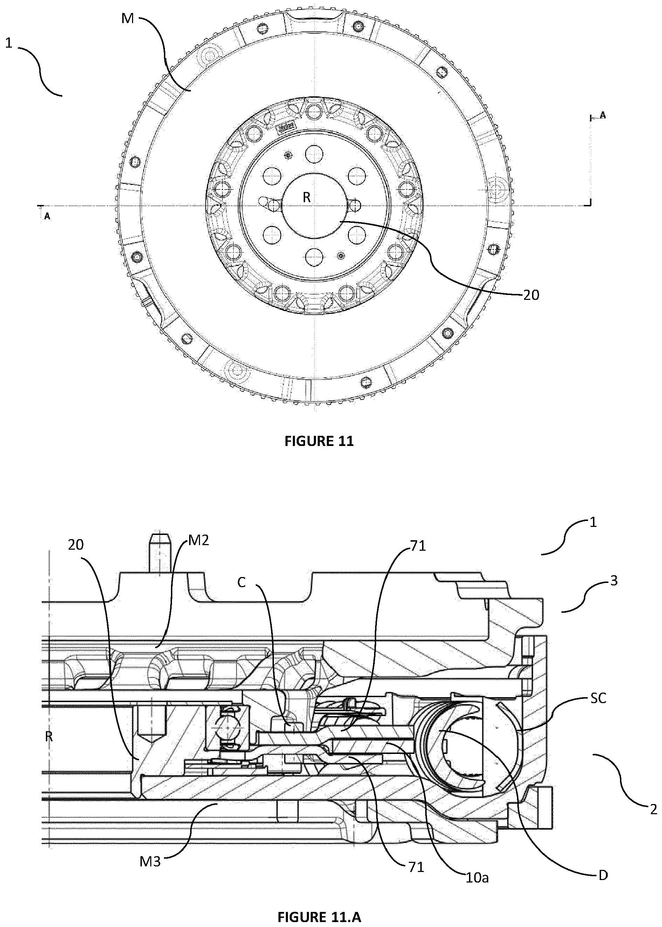

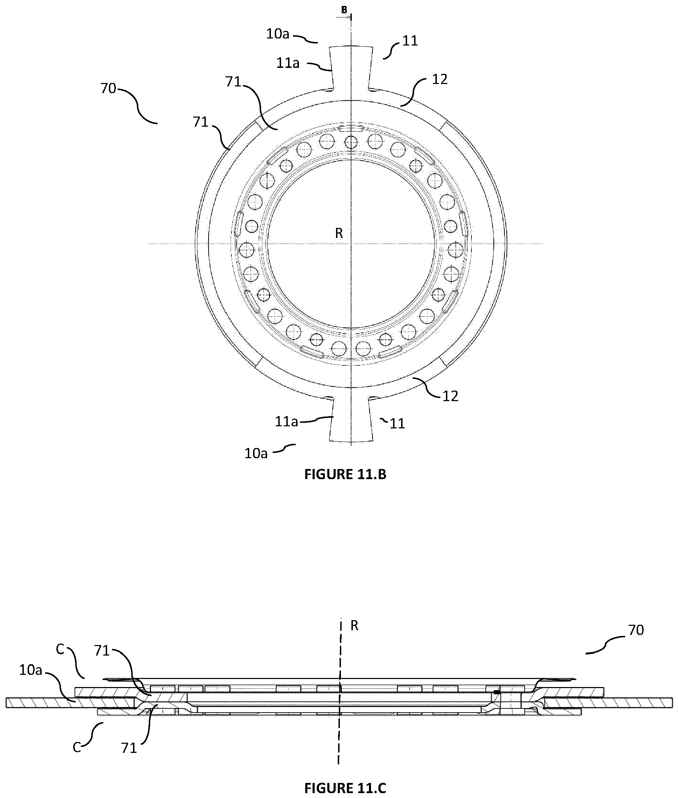

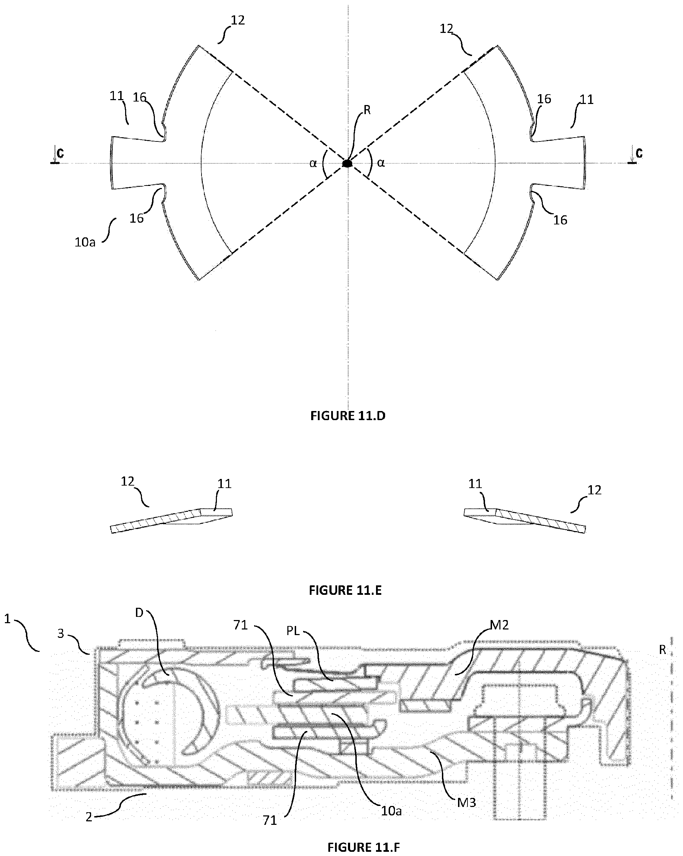

Figure 11 illustrates an isometric view of the eleventh embodiment of the torsion damping device.
Figure 11.A illustrates a cross section view of the Fig. 11.
Figure 11.B illustrates a top view of the torque limiter.
Figure 11.C illustrates a cross section view of Fig 11.B.
Figure 11.D illustrates a top view of flange of Fig. 11.C.
Figure 11.E illustrates a cross section view of Fig. 11.E along C-C line.
Figure 11.F illustrates a cross section view of the alternative embodiment of Fig. 11

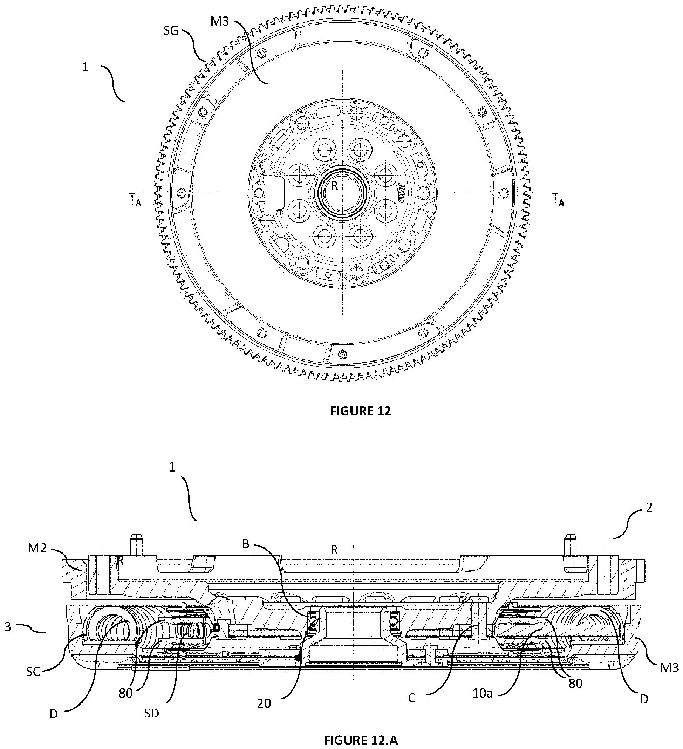

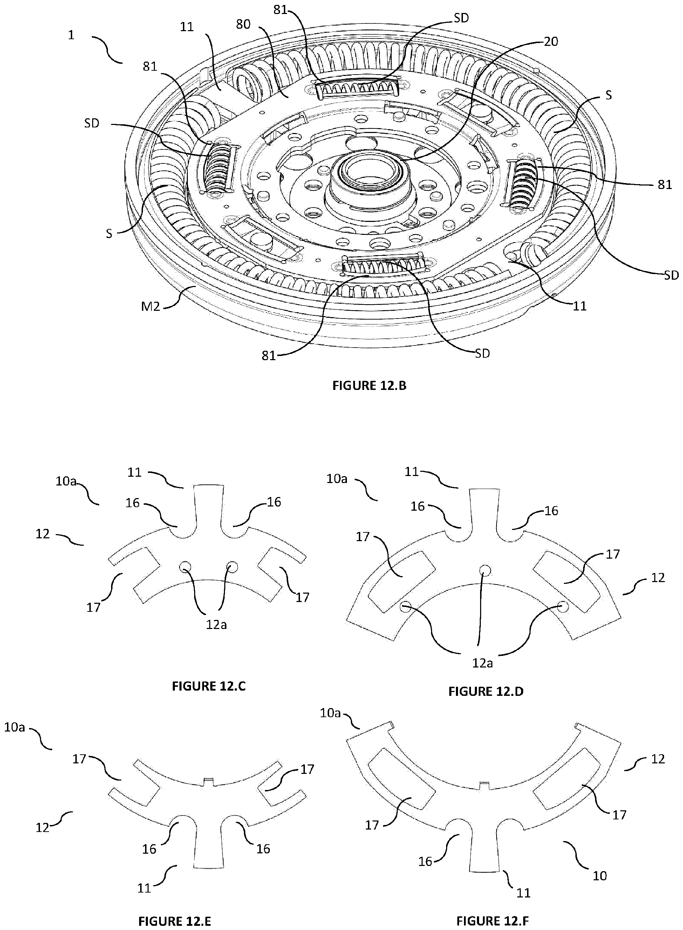

Figure 12 illustrates a top view of the twelfth embodiment of the torsion damping device.
Figure 12.A illustrates a cross section view of Fig. 12 along A-A line.
Figure 12.B illustrates an isometric view of an embodiment of the torsion damping device of Fig. 12, without the output torque element.
Figure 12.C illustrates a top view of flange of Fig. 12.A.
Figure 12.D illustrates a top view of alternative flange of Fig. 12.A.
Figure 12.E illustrates a top view of another alternative flange of Fig. 12.A.
Figure 12.F illustrates a top view of another alternative flange of Fig. 12.A.

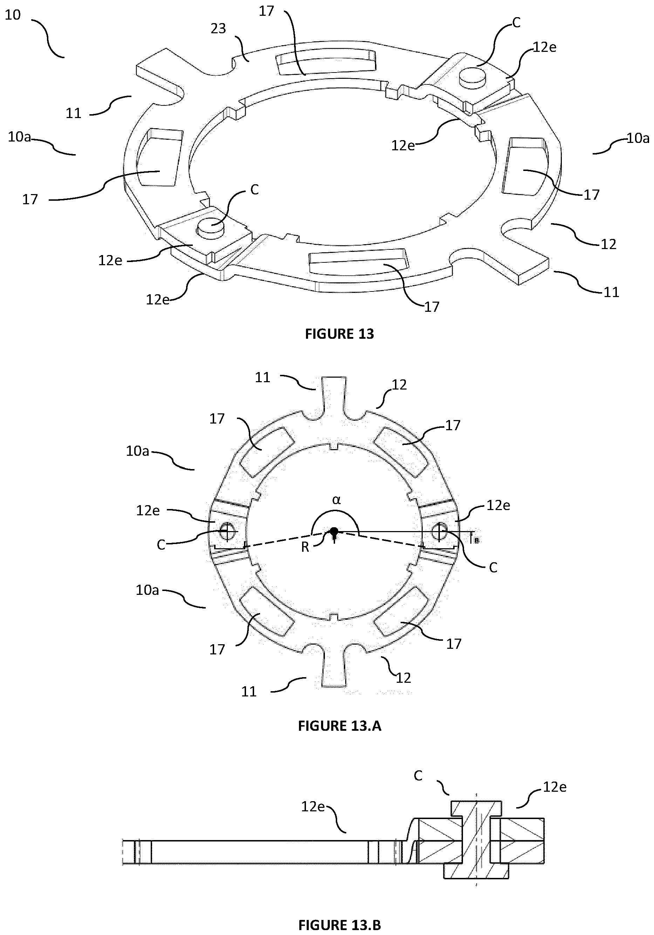

Figure 13 illustrates an isometric view of an embodiment of the flange.
Figure 13.A illustrates an isometric view of Fig. 13.
Figure 13.B illustrates a cross section view of Fig. 13.A along B-B line.

### REFERENCE NUMBERS OF THE FIGURES

**1.** Torsion damping device
**2.** Input torque element
**3.** Output torque element
   **3a.** Second inertia
   **3b.** Second flywheel
**4.** Tab housing
   **10.** Flange
      **10a.** Flange segment
      **10b.** First surface
      **10c.** Second surface
   **11.** Driving tab
      **11a.** Driving edge
      **11b.** End edge
      **11c.** End recess
   **12.** Connection part
      **12a.** Aperture
      **12b.** Connecting edge
      **12c.** Mounting surface
      **12d.** Tooth housing
      **12e.** End of connection part
   **13.** Protrusion
   **14.** Flange rivet
      **14a.** Shaft
      **14b.** Head
      **14c.** Cut section
      **14d.** Bend section
   **15.** Pendulum housing
   **16.** Second recess
   **17.** Spring housing
   **20.** Hub
      **20a.** Hub tooth
      **20b.** Secondary hub
   **21.** Connection plate
   **22.** Intermediate plate
   **23.** Hub plate
   **30.** Washer
   **40.** Cover
   **50.** Spring retainer
   **51.** Cavity
   **60.** Pendulum damping device
   **61.** Pendulum mass
   **62.** Pendulum window
   **63.** Pendulum plate connector
   **70.** Torque limiter
   **71.** Friction plate
   **80.** Retainer plate
   **81.** Retainer aperture
   **90.** Sealing washer
      **90a.** Washer apertures
   **D.** Damping means
   **M.** Mass
   **M2.** Input mass
   **M3.** Output mass
   **SD.** Secondary damping means
   **C.** Connection mean
   **G.** Gap
   **SC.** Sliding shell for springs
   **R.** Rotation axis
   **P.** Pin
   **PL.** Preload mean
   **SG.** Starter gear
   **TW.** Timing wheel
   **α.** Angle value

### DETAILED DESCRIPTION OF THE INVENTION

In this detailed description a flange (10) for torsion damping device (1) subject to the invention have been illustrated with non-limiting examples in order to further describe the subject matter of the invention.

The invention is related to a torsion damping device (1) for an internal combustion engine, in particular a motor vehicle and production method of the flywheel.

In this detailed description, the torsion damping device (1) is disclosed such that the torsion damping device (1) is double mass flywheel.

Referring to Fig. 1; in the first embodiment, the torsion damping device (1) comprises an input and an output torque element (2, 3) coaxially arranged and resiliently connected to each other by at least two damping means (D) and said input and said output torque element (2, 3) is assembly of a first annular mass and cover (40) and hub (20) and assembly of a second annular mass and hub (20).

A starter gear (SG) is mounted on the outer circumference section of the torsion damping device (1), especially on input torque element (2). The starter gear (SG) is in form of circular and having tooth on the surface. Said tooth transmit torque to starter motor of vehicle to the torsion damping device (1)

The damping means (D) are springs, preferably curved springs, are connected between the input and the output torque element (2, 3). A sliding shell for springs is provided, which preferably having curved surface corresponding to the springs, between outer circumference section of the input torque element (2) and the damping means (D). Said damping means (D) is positioned on the torsion damping device (1) in such way that don't contact each other and provide a gap (G) between them.

A cover (40) is positioned between the sliding shell (SC) and output torque element (3) to form a volume call chamber for containing damping means (D). The cover (40) is circular plate having an aperture on the center for mounting.

A washer (30) and a hub (20) is mounted on the input torque element (2). The hub (20) having and circular aperture, preferably having axially extended splines to transmit torque of the crankshaft, and the washer (30) positioned on the hub (20). An intermediate and connection plates (22, 21) are positioned on top of the washer (30). A hub plate (23) is mounted on bottom of the hub (20).

A flange (10) is mounted on the output torque element (3) to transmit the torque of the engine to the output torque element (3) to the input torque element (2). As can be seen, the flange (10) is segmented.

Referring to Fig. 1-1.F; the torsion damping device (1) is having a rotation axis (R) and the input and the output torque elements (2, 3) are provided coaxially in said rotation axis (R) which goes through on center of the hub (30). Each input and output torque element (2, 3) comprises a mass (M2, M3). The hub (30) is connected to mass (M2) of the input torque element (2) and a bearing (B) is mounted between mass (M3) of the output torque elements (3) and the hub (30) in radial direction.

The cover 24 is connected to the input torque element (2), preferably to a cylindrical portion of the mass (M2). The cover 24 and the input torque element (2) are firmly by welding, for example by laser welding type or by cold metal transfer welding type.

The bearing (B) comprises two sealing means (SM) provided top and bottom of itself. The washer (30) is positioned on the bearing (B). Respectively, an intermediate and connection plates (22, 21) are positioned on top of the washer (30).

The damping means (D) provided inner circumference section of input torque element (2) comprises four damping driving surfaces (DD) which is axially extended wall and damping driving surface (DD) is formed in such a way that compress the damping means (D) when the segmented flange (10) presses upon end of the damping means (D). The cover (40) and mass (M2) of the input torque element (2), are formed a housing call chamber for the damping means (D).

A least one sealing washer (90) is radially positioned between the input and output torque elements (2, 3) for sealing input and output torque elements (2, 3), and is attached to the output torque element (3), especially to the mass (M3) of the output torque element (3) by connecting means (C), especially by rivets. At least one of the sealing washers (90) is positioned between the cover (40) and the hub (20), especially the bearing (B) in radial direction. In all the embodiments, the torsion damping device can comprise two sealing washers, arranged axially on both sides of the segmented flange.

Two damping driving surfaces (DD) is formed for each damping means (D). The flange (10) is mounted on the output torque element (3) by using connection elements (C), preferably rivets.

Referring to the Figures 1.D-1.F; two damping means (D) are circularly positioned in such a way that don't contact each other and a gap (G) is formed between them. Driving tabs (11) are formed on the segmented flange (10), said each one of the drig tabs (11) positioned on one of the gaps (G). The segmented flange (10) is segmented and in particular, each flange segment (10a) has one of said driving tabs (11).

In addition, a connection part (12) is formed on each flange segments (10a). The connection part (12) may be the central body of each flange segment (10a). The driving tabs (11) extended radially from the connection part (12) to the gap (G). The connection part (12) preferably is in arc form and apertures (12a) are provided on the surface of the connection part (12). The connection elements (C), preferably rivets, are positioned on the apertures (12a) to connect flange segments (10a) to the second annular mass (3).

Preferably, the segmented flange (10) is connected to the sealing washer (90) by the connection means. The connection means (C) also connects the at least one sealing washer (90) and the flange segments (10a) to each other. When the output torque element (3) rotates, the driving tabs (11) compress the damping means (D) against damping driving surfaces (DD) and transmit to torque to the input torque element (2) via damping means (D), or vice-versa. As a result, a unitary sub-assembly is realized, which it simplifies for the operator handling, transport and final assembly on the torsion damping device. Three apertures (12a) are formed on the flange segment (10a) in this embodiment. The apertures (12a) are arranged on the connection part (12) in such a way that each side aperture (12a) are evenly spaced from middle aperture (12a) formed on the center axis of the flange (10). The flange segments (10a) are formed symmetrically in respect to axis goes through center of the flange segment (10a) and the torsion damping device (1). However, it is possible that the flange segment (10a) is in unsymmetrical form, too.

Referring to the Figures 1-12C the flange segments (10a), especially the connection parts (12), don't be connect or contact to each other. The flange segments (10a) are positioned on the torsion damping device (1) such that the flange segments (10a) are angularly spaced from each other. There is distance between them. The flange (10) provided by the flange segments (10a) is lighter than flanges is made of same material. Also the connection elements (C) used in segmented flange (10a) are exposed almost same amount of stress as one-piece flanges (10).

An end edge (11b) of the driving tab (11) an end recess (11c) formed, in order to avoid unbalance

A mounting surface (12c) is provided on the connection edge (12b) which is surface towards the hub (20). The mounting surface (12) is formed by creating offset the connection part (12). The bearing (B) is positioned on said mounting surface (12).

Side part of the driving tabs (11) are identified as driving edges (11a) and formed as contacting edge which contacts to the damping mean (D). The driving edges preferably (11a) are formed that contacts tangentially to the damping means (11a) so the driving edges (11a) contacts the damping means (D) fully.

The flange segments (10a) crates an angle in respect to center of the torsion damping device (1). This angle value (α) determines the circumferential extension length of the flange segment (10a). In this embodiments, the flange segments (10a) are angularly spaced so total angle value of flange (10), which sum of all the flange segment (10a) values, is smaller than 360°. In particular, the flange segments (10a) are angularly distributed around the R axis, preferably according to a regular distribution or a symmetrical distribution, in particular here angularly distributed over 90 degrees.

Preferably, the flange segments (10a) are identical in shape, in order to standardize and simplify their manufacturing. Each shape has a circumferential extension with an angle value (α) equal or less than 220 degrees.

The damping means (D) are positioned between the the cover (40) and the mass (M2), preferably the sliding shell (SC). The cover (40) is provided between masses (M2, M3) of the input and output torque elements (2, 3) in axial direction.

Advantageously the flange (10), especially the sealing washers (90) and/or the flange segments (10a) are mounted in support on the bearing (B) in radial direction.

In all embodiments, the mass (M2) of the input torque element (2) is connected to the hub (20) and the output torque element (3) is connected to the input torque element (2) by the damping means (D).

The sealing washer (90) is positioned between the cover (40) and the hub (20), especially the bearing (B) in radial direction. One of the sealing washers (90) is positioned under the flange segment (10a) and other one is positioned on top of the segmented flange (10a). The mass (M3) of output torque element (3) is connected to the flange segments (10a) by connection means (C). The connection means (C) also connects the sealing washers (90) the flange segments (10a).

The Figures 2-2B illustrate a second embodiment, substantially similar to the first embodiment, except that: the segmented flange (10) is in four pieces, in particular angularly distributed over 90 degrees. In particular, the flange segments (10a) are preferably identical in shape. Each shape has an circumferential extension with an angle value (α) equal or less than 60 degrees. Each flange segment (10a) is positioned that driving tabs (11) are positioned on the gaps (G). The flange segments (10a) are distributed evenly around the center of the torsion damping device (1).

In Fig. 2.D, two of four flange segments (10a) are shown. Two connection aperture (12a) are formed on arc shaped connection part (12). By connection means (C), the flange segments connected to the sealing washer (90) of the torsion damping device.

Furthermore, the flange segments (10a) also comprises the mounting surface (12c) is provided on the connection edge (12b) and end recess (11c) formed on edge (11b) of driving tab (11).

Referring to the Figures 2.C-2.D; four damping means (D), the circular spring, are positioned on the torsion damping device (1) and are all angularly spaced from each other. The gaps (G) is provided between damping means (D).

The Figure 3 illustrates a third embodiment, substantially similar to the first embodiment, except that: four gap (G) is provided between four damping means (D) and only two flange segment (10a) is used. Some gaps are exempt from driving tabs (11). There is no driving tabs (11) on two of the gaps, in order to reduce the numbers of driving tabs. It is not essential that positioning the driving tab (11) on every gap (G) provided.

The Figure 4-4C illustrate a third embodiment, substantially similar to the first embodiment, except that: the flange segments (10a) are formed in such a way that proving connection the flange segments (10a) and the hub (20). Preferably each flange segments (10a), especially the connection part (12), is directly connected to the hub (20), by cooperation of forms.

Referring to Figures 4.C-4.D; Hub tooth (20a) are provided outer surface on the hub and extends radially. Preferably, the hub tooth (20a) are in form of frusto-conical.

At least one, preferably two or more tooth housing (12d) are formed on the flange segments (10a), preferably on the connection part (12). The tooth housing (12d) are radially extending and wide enough to let movement of the hub tooth (20a) in angular direction. The connection apertures (12a) are formed on tabs created by the tooth housing (12d) on the end of the connection part (12).

In the fourth embodiment, the segmented flange (10) is in two pieces, the flange segments (10a) are preferably identical in shape. Each shape has an circumferential extension with an angle value (α) equal or less than 45 degrees.

Furthermore, referring to the Figures 4-4.B, the damping means (D) is provided as straight springs in this embodiment. Spring retainers (50) are positioned on both end of the damping means (D). Every spring retainers (50) comprises a cavity (51) to provide housing for ends of springs. The spring retainers (50) is positioned in such a way that back of the spring retainer (50) contacts each other. Also, the gaps (G) for driving tabs is provided between back of the spring retainers (50) which doesn't contact each other.

The Figure 5-5.B illustrate a fifth embodiment, substantially similar to the first embodiment, except that: the segmented flange (10) is in three pieces, the flange segments (10a) are preferably identical in shape. Each shape has an circumferential extension with an angle value (α) equal or less than 45 degrees.

In Fig. 5.C, pre-assembled the sealing washer (90) and the flange segments (10a) are shown. This pre-assembled structure can be used for every embodiment which the sealing washer (90) and the flange segments (10a) directly connects each other.

A washer apertures (90a) are formed on the sealing washer (90). The washer apertures (90a) are angularly distributed on the surface of the sealing washer (90) and the connection apertures (12a) of connection part (12) are aligned with the washer apertures (90a). After that connection means (C), preferably rivets, positioning through said apertures to fix which the sealing washer (90) and the flange segments (10a) to each other.

Furthermore, also two axially distant sealing washers (90) can be preassembled to the flange segments (10a). The flange segments (10a) is positioned between the sealing washers (90) in such way that the connection apertures (12a) and the washer apertures (90a) are aligned. After that, three elements are fixed each other by the connection means (C).

Referring to Figures 5.D-5.F; at least one axially extended protrusion (13) is provided on the flange segment (10a), preferably on the connection part (12). The protrusion (13) preferably integrated on the flange segment (10a). The flange segment (10a) has first and second sides (10b, 10c) which looks towards the input or output torque elements (2, 3). The protrusion (13) is formed on at least one of said surfaces, preferably on both surfaces. The protrusion can be used for subassembly mounting. Furthermore, the flange segments (10a) with the protrusion (13) may comprises the connection apertures (12a).

The Figure 6-6.E illustrate a fifth embodiment, substantially similar to the first embodiment, except that: an integrated flange rivet (14) is formed on the first surface (10b) of the flange segment (10a), on the same material to reduce material costs.

Referring to the Figures 6-6.B; in sixth embodiment, said flange rivet (14) connects the flange segment (10a) to one of the sealing washers (90).

Preferably, the shape of at least one flange segment (10a) has preferably an circumferential extension with an angle value (α) equal or less than 80 degrees.

Referring to Fig. 6.B, this rivet flange (14) can be circumferentially offset from the center or barycenter of the flange segment (10a), in order for example to secure it in rotation in a relative direction of rotation, or with another component of the torsion damping device.

An alternate version of the sixth embodiment is shown in Fig. 6.C. The segmented flange (10) comprises two integrated flange rivet (14) and in particular formed axially on both sides. One of them, for example formed in the first surface (10b), is connected to the sealing washers (90) positioned under the flange segment (10a) ; and other one, for example formed in the second surface (10c), is connected to the other sealing washer (90) positioned on top of the segmented flange (10a).

Referring to the Figures 6.D-6.E; the integrated flange rivet (14) comprises an axially extending shaft (14a) and head (14b) having larger radius than shaft (14a). As can be seen in Fig. 6.E, at least one flange rivet (14) can be formed each surfaces of the segmented flange (10a), preferably on the connection part (12).

The Figure 7-7H illustrate a seventh embodiment, substantially similar to the first embodiment, except that: the torsion damping device, especially the damping means (D), comprises a pendulum damping device (60), call inner pendulum, and preferably the flange segments (10a) are formed in such a way that proving connection the flange segments (10a) and the pendulum damping device (60). The pendulum damping device (60) acts to reduce the amplitude of torque pulse peaks and troughs enabling the performance of a flywheel. The pendulum device (60) comprises at least one, preferably two pendulum plate (61) movably mounted on a pendulum support. In this embodiment, the flange segments (10a), especially connection parts (12), act as a pendulum support.

Referring to the Figures 7.B-7.D; the pendulum damping device (60) is positioned between the input and output torque elements (2, 3) in axial direction. The pendulum damping device (60) comprises two pendulum plate (61) which are axially distant to each other and the flange segments (10a) are positioned between the pendulum plates (61). Pendulum windows (62) are formed on the pendulum plates (61). Said pendulum plates (61) are movably connected each other by pendulum plate connector (63) on the pendulum windows (62). At least one, preferably two pendulum housing (15) are formed on the flange segment (10a), specifically on the connection part (12), for providing aperture which pendulum plate connector (63) goes through. Movement of the pendulum plates (61) damps torque pulse peaks of the engine. Besides, the output torque element (3) can be in a disc form, the thickness being sensibly the same on all the extension of the piece, including the thickness of mass (M3).

Referring to the Figures 7.E-7.H; the flange segment (10a) with the pendulum housing (15) further comprises the integrated flange rivets (14). The integrated flange rivets (14) may be formed on the surface of the connection part (12). Alternatively, a radially extended cut section is provided on the connection part (12) and cut part is bended in such a way that form a bend section (14d). The bend section (14d) changes the direction of the cut part to axial direction to form the integrated flange rivets (14).

Referring to the Fig 8-8.A; in eight embodiment of the invention, mass (M) of the input torque element (2) is connected to the hub (20) and the output torque element (3) is connected to the input torque element (2) by the damping means (D). The damping means (D) are positioned between the sliding shell (SC) and the cover (40). The cover (40) is provided between masses (M2, M3) of the input and output torque elements (2, 3) in axial direction. The mass (M3) of output torque element (3) is connected to the flange segments (10a) by connection means (C). Here, said mass (M3) of the output torque element (3) is second inertia.

Referring to the Figures 9-9.A; in ninth embodiment of the invention, substantially similar to the first embodiment, the mass (M2) of the input torque element (2) is connected to the hub (20) and the output torque element (3) is connected to the input torque element (2) by the damping means (D). A secondary hub (20a) is positioned on the hub (20). The damping means (D) are positioned between the sliding shell (SC) and the cover (40). The cover (40) is provided between masses (M2, M3) of the input and output torque elements (2, 3) in axial direction. The secondary hub (20a) is connected to the flange segments (10a) by connection means (C).

Referring to the Figures 10-10.A; in tenth embodiment of the invention, substantially similar to the first embodiment, the mass (M2) of the input torque element (2) is connected to the hub (20) and the output torque element (3) is connected to the input torque element (2) by the damping means (D). The mass (M3) of output torque element (3) is connected to the flange segments (10a) by connection means (C). Here, said mass (M3) of the output torque element (3) is second flywheel. Besides, the output torque element (3) can be in a disc form, the thickness being sensibly the same on all the extension of the piece, including the thickness of mass (M3).

The Figure 11-11F illustrate a eleventh embodiment, substantially similar to the first embodiment, except that the torsion damping device, especially the damping means (D), comprise a torque limiter (70), preferably pre-assembled, and the flange segments (10a) doesn't require any connection aperture (12a) or rivets as a connection means (C).

The torque limiter (70) comprises two friction plates (71) connected to each other and end portions of the friction plates (71) is axially distant. The flange segments (10a) are positioned between the friction plates (71) and the friction plates (71) clamps the flange segments (10a), especially the connection parts (12). Here, the friction plates (71) acts as the connection mean (C) because of clamping action. The flange segments (10a) are positioned angularly spaced between the friction plates (71). Due to the over-torque conditions, the friction plates (71) delimit a free space called a housing, which receives the connection part (12) of each flange segment (10a). In order to prevent breakage of the segmented flange (10), the housing may also allow the flange segments (10a) to slide relative to the friction plates (71). Each friction plate (71) may support a group of friction linings. The friction linings then cooperate axially on both sides with the segmented flange (10), in particular with the connection part (12).

The torque is transmitted to the flange segments (10a) from the friction plates (71). Here, the connection part (12) of the flange segment (10a) is in form of a sealing washer provide preload on the friction plates (71), as can be seen Fig. 11D and 11.E. Thus, when the torque exceeds the friction force between the friction plates (71) and the connection part (12), the friction plates (71) slips and torque transmission stops.

The connection part (12) of the flange segment (10a) is in form of arc and doesn't comprises any connection element. A second recess (16) is formed on the section where the driving tab (11) and the connection part, in order to mainly to reduce the stress.

The flange segments (10a) are also positioned angularly spaced in respect to each other. Sum of the angle value (α) of the flange segments (10a) is lower than 360° in this torque limiter (70).

An alternative embodiment of eleventh embodiment is shown in Fig. 11.F. In this embodiment, the connection part (12) of the flange segment (10a) is in form of planar plate so it can't provide preload for the friction plates. A preload mean (PL) is positioned between one of the friction plates (71) and fixed surface. The preload means (PL) is washer or belleville spring which are press said friction plates (71) for providing preload.

The Figure 12-12.C illustrate a twelfth embodiment, substantially similar to the first embodiment, except that the torsion damping device, especially the damping means (D), comprise an inner damper. The inner damper comprises two retainer plates (80) is positioned in such a way that axially distant from each other.

Plurality of retainer apertures (81) are formed on the retainer plates (80). The retainer apertures (81) are aligned and a secondary damping means (SD), preferably springs, is positioned aligned inside retainer apertures (81) in such way that contacts both of the retainer apertures (81).

A spring housings (17) are formed on the connection part (12) of the flange segments (10a), as can be seen Fig. 12 C and 12.D. The flange segments (10a) is mounted on the torsion damping device (1) in such a way that the secondary damping means (SD) is positioned on the spring housings (17). When the transmission of torque starts, the damping effect of the inner damper is applied on the flange segments (10a) because of relation between the spring housing (17) and the secondary damping means (SD).

Referring to the Figures 12.C and 12.D; the spring housing (17) can be formed as aperture or alternatively, formed an angularly extended recess on each end of the connection part (12). Optionally, the connection apertures (12a) are formed on the connection part (12). In Figures 12.E and 12.F, the flange segments (10a) shown in Figures 12.C and 12.D are formed without the apertures.

The Figure 13-13B illustrate a thirteenth embodiment, substantially similar to the first embodiment, except that the flange segments (10a) form the flange (10) can be connected each the other. The flange segments (10a) can overlap each other, or the flange segments (10a) can be nested within each other. To make them jointly and severally fixed, the flange segments (10a) can be welded to each other via ends of the connection part (12e) to form the flange (10). Alternatively, the ends of the connection part (12e) are bent to create an axial offset in respect to rest of the connection part (12) and said ends overlaps each other. The connection apertures (12a) are formed on said ends of the connection part (12e). By using the connection means, preferably rivets, the flange segments (10a) are fixed to each other.

For the connected flange segments (10a), sum of total angle value (α) of flange segments (10a) must be higher than 360°. In Fig 13.A, two flange segments (10a) are used and the angle value (α) of single flange segment (10a) is bigger than 180°.

Referring to the Fig.13.A; a spring housing (17) are formed on the connected flange segments (10a). Instead of a spring housing (17), the pendulum housing (15) also can be formed.

We now describe the pre-assembly of the flange segments (10a) and the at least one sealing washer (90), to form the segmented flange (10). Referring for example to the Figures 5.C, the pre-assembled of the sealing washer (90) and the flange segments (10a) can be used for the torsion damping device (1), as we already mentioned. To assemble a damping module for a torsion damping device (1), a plurality of flange segments (10a) having the connection part (12) and at least one sealing washer (90) and the connection means (C) are provided. Said connection part (12) is integrated or connected to flange (10). The connection means (C) are rivets or alternatively protrusions (13) and/or integrated flange rivet (14). The flange (10) may be composed of multiple angularly spaced flange segments (10a) or flange segments (10a) connected each other on ends of the connection part (12e). The flange (10) is connected to the washer apertures (90a) of sealing washer (90) by connection means (C). Optionally, second sealing washer (90) can be connected to the flange (10) by the connection means (C) and the washer apertures (90a).

In a preferred embodiment, the connection aperture (12a) of the flange segment (10a) and the washer apertures (90a) are aligned and series of rivet is positioned on aligned apertures.

Also, the sealing washer (90) acts as a connection mean (C) which connects the flange segments (10a) to each other.

Furthermore, we already mentioned that the invention may comprises the torque limiter (70). The flange segments (10a) can be pre-assembled with torque limiter (70). For assembly method of said torque limiter (70), two friction plates (71) are provided. The friction plates (71) are circular plates with aperture provided on its center. The inner dimeter of the friction plates (71) are provided in such a way that contact each other and outer diameter of friction plates (71) are provided axially distant to each other. The connection part (12) of the flange segments (10a) are positioned between axial distance between the outer diameter of friction plates (71). The friction plates are fastened each other by the rivets and clamps the connection parts (12) and act as a connection element (C). Also, the sealing washer (90) is pre-assembled to the torque limiter (70) by rivet connects the friction plates (71) to each other.

The protection scope of the invention has been mentioned in the claims that are attached and the invention cannot be limited to the embodiments described in this detailed description. It is clear that a person skilled in the art can provide similar embodiments within the scope of the above mentioned descriptions without deviating from the main theme of the invention.

## Claims

1. A torsion damping device (1) for a torque transmission of a vehicles engine, comprising at least:
- one input torque element (2) and one output torque element (3), having an rotation axis (R),
- one group of at least two damping means (D) mounted between the input and output torque elements, acting against the rotation of the input and output torque elements relative to each other,
- at least two gap (G) provided between ends of the damping means (D),
- a damping module comprising a flange (10) having at least two radially extended driving tabs (11), which is positioned on the gaps (G), to support the group of damping means (D),
wherein the flange (10) is segmented and connected directly or indirectly to each other by connection means (C), each flange segment (10a) having one of the driving tabs (11).

2. A torsion damping device (1) according to Claim 1, wherein each flange segments have a connection part (12) connected or integrated to each of the driving tabs (11) for cooperate with or be fixedly connected to one of the input or output torque elements (2, 3), preferably at least one of the connection means (C) is formed on a connection part (12) of the flange segments (10a) for connecting the flange segment (10a) to one of the input or output torque elements (2, 3).

3. A torsion damping device (1) according to Claim 2, wherein a spring housing (17) is formed on at least one of the connection parts (12) for secondary damping mean (SD) of the flywheel.

4. A torsion damping device (1) according to Claim 2 or 3, wherein at least one of the connection parts (12) is in form of arc.

5. A torsion damping device (1) according to any of Claim 2 to 4, **characterized by** the connection parts (12) are connected to each other by riveting or welding, preferably the end of connection part (12) are bent in such a way that connected end (12e) are positioned on top of each other, preferably total angle value of the flange segments (10a) is between 360° and 440.

6. A torsion damping device (1) according to any of preceding Claims, **characterized by** at least one of the connection means (C) is
- at least two connection rivets for connecting the flange segments (10a) to one of the input and output torque elements (2, 3).
- a protrusion (13) or integrated flange rivets (14) from flange segments (10a), preferably made by machining or forging or casting step.

7. A torsion damping device (1) according to any of preceding Claims, wherein it comprises at least one sealing washer (90) supported on the input and output torque elements, the at least one sealing washer (90) forming at least one of the connection means (C) for connecting the flange segments (10a) to each other, preferably indirectly.

8. A torsion damping device (1) according to any of preceding Claims, wherein a total angle value (α) of the flange segments (10a) is less than 360 degree, preferably between 30° and 359°, for example between 15° and 220°.

9. A torsion damping device (1) according to any of preceding Claims, wherein each flange segments have a connection part (12) connected or integrated to each of the driving tabs (11) for cooperate with or be fixedly connected to one of the input or output torque elements (2, 3),
preferably at least one of the connection means (C) is formed on a connection part (12) of the flange segments (10a) for connecting the flange segment (10a) to one of the input or output torque elements (2, 3).

10. **A** torsion damping device (1) according to any of preceding Claims, wherein it comprises a pendulum damping device (60) arranged axially between the input and output torque elements (2, 3) having at least one pendulum plate (61) movably mounted on flange segments (10a) which forms a pendulum support.

11. A torsion damping device (1) according to any of Claim 1 to 9, wherein it comprises a torque limiter (70) that having at least two friction plates (71) axially distant from each other, the flange segments (10a) are positioned between the friction plates (71).

12. A torsion damping device (1) according to Claim 11, wherein it comprises a preload means (PL) which applying load on one of the friction plates (71).

13. A torsion damping device (1) according to Claim 2 in combination with any Claim 11 to 12 , wherein at least one of the connection part (12) is formed as a spring mean, preferably as a sealing washer (90), to preload on at least one of the friction plates (71).

14. A method of assembling a damping module for a torsion damping device, comprising at least the following steps:
a) Providing at least:
- a flange (10), with an rotation axis (R), formed by a plurality of flange segments (10a) having a connection part (12), which is pre-connected to the flange (10) or made in the flange (10), and
- at least one sealing washer (90), and
- connection means (C) ;
b) Arranging the flange segments (10a), angularly spaced each other or overlapping each other;
c) Connecting at least one sealing washer (90) to the connection part (12) of the flange segments (10) by connecting means (C), in order to pre-assembly the sealing washer (90) and the flange segments (10).

15. A method of assembling a damping module according to Claim 14, wherein the connection means (C) is formed by two friction plates (71) and the pre-connection of the flange segments (10a) to the connection means (C) comprise at least the following steps:
a) Providing
- two friction plates (71) in order to form the connection mean (C),
- another connection mean (C), like for example a series of rivets;
b') Inserting the flange segments (10) between the two friction plates (71);
c') Clamping the flange segments (10a) between the two friction plates (71), and then securely connecting the friction plates (71) and the sealing washer (90) together by other connecting mean (C), so that the flange segments (10) are tightly mounted between the two friction plates (71).
